# NEW EUROPEAN PATENT SPECIFICATION

(11) **EP 1 993 907 B2**
(45) Date of publication and mention of the opposition decision: **02.01.2019**
(45) Mention of the grant of the patent: 22.12.2010
(21) Application number: 07861210.8
(22) Date of filing: 12.01.2007
(51) Int. Cl.: B64C 25/60, F16F 9/36

(54) **AIRCRAFT SHOCK STRUT HAVING IMPROVED CYLINDER AND BEARINGS**
FLUGZEUG-FEDERBEIN MIT VERBESSERTEM ZYLINDER UND VERBESSERTEN LAGERUNGEN
MONTANT AMORTISSEUR POUR AÉRONEF ÉQUIPÉ D'UN CYLINDRE ET DE PALIERS AMÉLIORÉS

(30) Priority: 13.01.2006 US 758689 P
(43) Date of publication of application: 26.11.2008
(73) Proprietor: Goodrich Corporation, Charlotte, NC 28217-4578 (US)
(72) Inventor: LUCE, William E., Colleyville, TX 76034 (US); MAITLAND, Scott, Broadview Heights, Ohio 44147 (US)
(74) Representative: Dehns
(86) International application number: PCT/US2007/000904
(87) International publication number: WO 2008/048335

(56) References cited:
- EP-A- 0 189 626
- EP-A2- 0 189 626
- WO-A-2004/079217
- WO-A1-2004/079217
- US-A- 5 338 827
- US-A- 5 660 482
- US-A- 5 660 482
- US-B1- 6 676 076
- US-B1- 6 676 076
- BOING DESIGN MANUAL BDM-1054 REV D OF 20 NOVEMBER 1998 : TITANIUM ALLOYS.
- MILLER; HOLLADAY: 'FRICTION AND WEAR PROPERTIES OF TITANIUM' WEAR vol. 2, 1958,
- JACQUOT P.: 'TRAITEMENTS ET REVÈTEMENTS DE SURFACE DES ALLIAGES D'ALUMINIUM, MAGNÉSIUM ET TITANE' ATTT CONFERENCE PROCEEDINGS: AMÉLIORATION DE PROPRIÉTÉS TRIBOLOGIQUES D'ALLIAGES DE TITANE PAR LES PROCÉDÉS PVD ET TRINITON 23 October 2001 - 24 October 2001, TOULOUSE, FR,
- QU J. ET AL: 'FRICTION AND WEAR OF TITANIUM ALLOYS SLIDING AGAINST METAL, POLYMER, AND CERAMICCOUNTERFACES' WEAR vol. 258, no. 9, 01 April 2005, ELSEVIER SEQUOIA, LAUSANNE, CH, pages 1348 - 1356, XP027614359
- CATALOGUE AMPEP, UNDATED
- COPY OF A PAGE OF THE SKF WEB SITE SUMMARISING APEP COMPANY
- "DESIGNER HANDBOOK", FOR BEARINGS "DP4", FROM GGB, DATED 2004
- "MANUEL TECHNIQUE", FOR BEARINGS "DU/DU-B", FROM GGB, DATED 2003
- FIRST PAGE OF THE NORM MIL-B-81819B, DATED 01-06-1987.
- EXTRACT "COMPRISED OF/COMPOSED OF" OF WEB SITE: HTTP://PUBLIC.WSU.EDU/-BRIANS/ERRORS/COMPRI SED.HTML, DOWNLOADED 10-12-2013
- EXTRACT FROM: HTTP://LANGUAGELOG.LDC.UPENN.EDU/NL1/?P=313 6, DOWNLOADED 10-12-2013
- COLLECTION OF FURTHER EXTRACTS REGARDING APEP FROM SKF'S WEBSITE, DOWNLOADED 11-12-2013
- WEB SITE EXTRACT CONTAINING DATA ON UK DEFENCE STANDARDS SERIES 05, DOWNLOADED 11-12-2013
- UK DEFENCE STANDARD 05-92/ISSUE2 COMPRISING AMENDMENT 1, REPRINTED 23-03-2001
- EXTRACT OF "AIRLINERS" INTERNET SITE REGARDING THE AIRBUS A320
- EXTRACT OF "AERONAUTICAL WORLD" INTERNET SITE REGARDING A320
- TECHNICAL DRAWING OF AN AIRBUS A320'S MAIN UNDERCARRIAGE SHOCK ABSORBER HOUSING
- EXTRACT OF "AIRLINERS" INTERNET SITE REGARDING THE FOKKER F100
- EXTRACT OF "AERONAUTICAL WORLD" INTERNET SITE REGARDING F100
- TECHNICAL DRAWING OF A FOKKER F100'S MAIN UNDERCARRIAGE SHOCK ABSORBER HOUSING
- EXTRACT OF "AEROSPACE TECHNOLOGY" INTERNET SITE REGARDING THE BAE ATP
- EXTRACT OF "AIRLINERS" INTERNET SITE REGARDING ATP
- TECHNICAL DRAWING OF A BAE ATP'S MAIN UNDERCARRIAGE SHOCK ABSORBER HOUSING
- JACQUES VEAUX: UN DEMI/SIÈCLE D'AÉRONAUTIQUE EN FRANCE, LES TRAINS D'ATTERISSAGE ET LES SYSTÈMES ASSOCIÉS, 2006
- SAE AEROSPACE, AIR5883, OFFICIAL VERSION OF MAY 2006
- SAE AEROSPACE, AIR5883, DRAFT VERSION OF 11 OCTOBER 2004
- "AEROSPACE BEARING DESIGN MANUAL" FROM AMPEP PLC, UNDATED

## Description

### Field of the Invention

The present invention relates to aircraft shock struts for absorbing and damping shock forces, such as during landing, taxiing or takeoff, and particularly an aircraft shock strut having a titanium cylinder and bearings compatible therewith.

### Background of the invention

Shock absorbing devices are used in a wide variety of vehicle suspension systems for controlling motion of the vehicle and its tires with respect to the ground and for reducing transmission of transient forces from the ground to the vehicle. Shock absorbing struts are a common and necessary component in most aircraft landing gear assemblies. The shock struts used in the landing gear of aircraft generally are subject to more demanding performance requirements than most if not all ground vehicle shock absorbers. In particular, shock struts must control motion of the landing gear, and absorb and damp loads imposed on the gear during landing, taxiing and takeoff.

A shock strut generally accomplishes these functions by compressing a fluid within a sealed chamber formed by hollow telescoping cylinders. Typically, at least two bearing assemblies provide for sliding engagement of the telescoping cylinders..The fluid generally includes both a gas and a liquid, such as hydraulic fluid or oil. One type of shock strut generally utilizes an "air-over-oil" arrangement wherein a trapped volume of gas is compressed as the shock strut is axially compressed, and a volume of oil is metered through an orifice. The gas acts as an energy storage device, such as a spring, so that upon termination of a compressing force the shock strut returns to its original length. Shock struts also dissipate energy by passing the oil through the orifice so that as the shock absorber is compressed or extended, its rate of motion is limited by the damping action from the interaction of the orifice and the oil.

Designers of aircraft landing gear, are always looking for ways to improve design, performance, cost, etc. One desirable improvement is reducing the overall weight of the shock strut within the landing gear. While some efforts have been made to incorporate lighter weight materials into shock struts, it has been the case that lighter weight materials are more susceptible to premature wear, thereby requiring frequent replacement and resulting in increased maintenance costs.

A prior art shock strut is shown in US 6,676,076 B1.

In one aspect the present invention provides an aircraft shock strut according to claim 1. In another aspect the present invention provides a method of reducing weight of an aircraft landing gear according to claim 10.

### Summary of the invention

The foregoing and other features of the invention are hereinafter fully described and particularly pointed out in the claims, the following description and annexed drawings setting forth in detail a certain illustrative embodiment of the invention, this embodiment being indicative, however, of but one of the various ways in which the principles of the invention may be employed.

### Brief Description of the Drawings

FIG. 1 is a schematic elevation view of a simplified landing gear assembly incorporating a shock strut in accordance with the present invention.
FIG. 2 is a partial cross-sectional view of the shock strut of FIG. 1 taken along the line 2-2 thereof.
FIG. 3 is a perspective view of a bearing in accordance with the present invention.
FIG. 4 is a perspective view of an exemplary upper bearing assembly in accordance with the present invention.
FIG. 5 is cross-sectional view of FIG. 4 taken along line 5-5.
FIG. 6 is a sectional view of another exemplary bearing.
FIG. 7 is an enlarged sectional view of a portion of the bearing of FIG. 6.

### Detailed Description

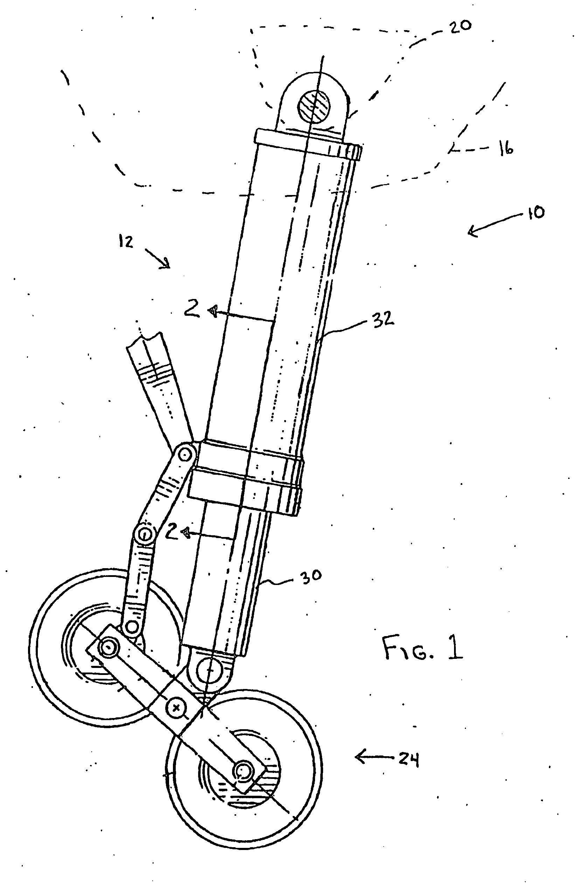

FIG. 1 presents a simplified aircraft landing gear assembly 10, e.g., a main landing gear assembly, a nose landing gear assembly, body or wing landing gear assemblies, a centerline landing gear assembly or the like, including an exemplary aircraft shock strut 12, shown mounted at an upper end to an aircraft structure 16 by an attachment member 20. The references herein to a shock strut or an aircraft shock strut refer to shock struts employed in aircraft landing gear. The lower end of the shock strut 12 is attached to a wheel assembly 24. The aircraft structure 16, attachment member 20 and wheel assembly 24 are shown in simple or outline form, while other structures such as locking mechanisms and retracting mechanisms are not shown in FIG. 1 in order to avoid obscuring the shock strut. Various arrangements of such structures are known in the art and are not critical to the description or understanding of the invention.

The shock strut 12 includes a piston 30 and a cylinder 32, which may be cylindrical as is customary, or some other shape, if desired. The shock strut is configured for attachment to the aircraft structure 16 and the wheel assembly 24 such that the piston communicates forces to and from the wheel assembly 24. The cylinder 32 receives the piston 30 in a manner that permits relative telescoping movement between the cylinder 32 and the piston 30 to absorb and dampen shock forces being transmitted to the aircraft structure 16. As is described more fully below, the cylinder 32 is of titanium or a titanium alloy, and one or more bearings in accordance with the present invention are disposed between the titanium cylinder 32 and the piston 30 for providing sliding engagement between the titanium cylinder 32 and the piston 30.

It will be appreciated that the present invention is applicable to a variety of aircraft shock strut types and geometries, provided that the aircraft shock strut includes at least one bearing. Because the detailed workings of a typical aircraft shock strut are understood by those of ordinary skill in the art, an overview of shock strut operation is provided for the sake of brevity. The piston 30 and the cylinder 32 generally define a sealed elongate chamber at least partially filled with a liquid, such as hydraulic fluid or oil. A portion of the chamber, e.g., an upper portion of the chamber, may be filled with a gas, such as nitrogen, as is common in an air-over-oil type of shock strut.

In operation, compression of the shock strut 12 causes the piston 30 to move into the cylinder 32, thereby reducing the volume of the sealed chamber, and compressing the portion filled with gas. The compressed gas stores energy in a manner similar to a spring. Relative telescoping movement of the piston into the cylinder pumps liquid from a generally lower dynamic liquid chamber typically through an orifice plate, into a pneumatic chamber as the shock strut 12 Is compressed, thereby increasing resistance to compression, while simultaneously dissipating compression energy. As the piston 30 moves into the cylinder 32, a metering pin moves into an orifice opening in the orifice plate, effectively reducing the flow area through the orifice opening and increasing resistance to further compression.

Part of the work expended in compressing the shock strut 12 is stored as recoverable spring energy in the portion filled with gas, which resiliently suspends the aircraft structure 16 while taxiing on the ground, and which also allows the piston and the cylinder to return to an extended position after the compression force is removed, such as after takeoff.

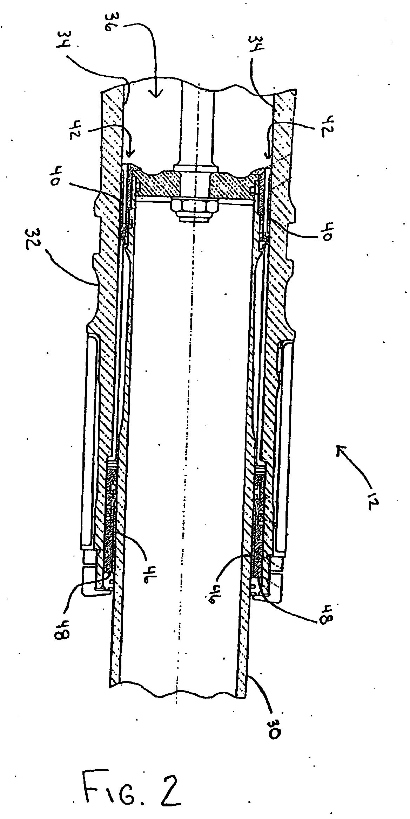

Referring now to FIG. 2, a portion, e.g., a lower portion, of an aircraft shock strut 12 is presented. As illustrated, the shock strut 12 includes a piston 30 and a cylinder 32 having an inner surface 34 for receiving the piston 30 in a manner that permits relative telescoping movement between the cylinder 32 and the piston 30, and defines there between an elongate chamber 36 filled with a liquid and a gas. In one embodiment, the piston 30 is comprised of steel. Alternatively, the piston is comprised of titanium. In yet another embodiment, the piston is plated or otherwise coated with a suitable material, such as chrome or tungsten carbide.

The cylinder 32 is a titanium cylinder. As used herein, the term "titanium" is intended to include titanium as well as any titanium alloy that a skilled artisan would deem suitable for use in an aircraft landing gear shock strut. Suitable titanium alloys may include, but are not limited to, alpha/near alpha alloys, alpha + beta alloys, beta alloys and the like. In an exemplary embodiment, the cylinder is comprised of Ti 6-22-22 or Ti 10-2-3. Skilled artisans will appreciate that the above-mentioned titanium alloys are referred to by their common names. For example, the skilled artisan will appreciate that "Ti 6-22-22" is the common name for Ti-6Al-2Zr-2Sn-2Mo-2Cr-0.25Si. As mentioned above, the cylinder can be comprised of other suitable titanium alloys without departing from the scope of the present invention.

A first bearing 40, e.g., an upper bearing, is disposed between the piston 30 and the cylinder 32. In the illustrated embodiment, the first bearing 40 is mounted or otherwise coupled to the piston 30 via a first bearing carrier 42, and has a bearing surface that contacts and provides sliding engagement with the cylinder 32. As illustrated, a second bearing 46, e.g. a lower bearing, is mounted or otherwise coupled to the cylinder 32 via a second bearing carrier 48, and has a bearing surface contacting and providing sliding engagement with the piston 30. As is described more fully below, the first bearing 40 is comprised of a non-metallic composite material that is operable to provide sliding engagement between the piston 30 and the inner surface 34 of the titanium cylinder 32 without creating excessive wear for the inner surface of the titanium cylinder. Artisans will appreciate that the term "excessive wear" or "excessive wearing" can refer to wear that is significantly greater than the wear experienced in conventional assemblies, e.g., an aluminum bronze bearing sliding against a plated or bare steel cylinder. Alternatively, "excessive wear" can refer to wear that makes a given bearing-cylinder combination less than commercially viable.

In one embodiment, the second bearing also is comprised of a non-metallic composite material that is the same as or different from the non-metallic composite material of which the first bearing is compriseds. Alternatively, as is discussed below, the second bearing can be comprised of another material, e.g., a lead-free polytetrafluoroethylene (PTFE) material, aluminum bronze, lead-based PTFE or any other suitable material.

As used herein, the terms "upper" and "lower," such as "upper bearing " and "lower bearing," refer to relative position, and are intended to facilitate explanation of the invention. It is not intended to limit the invention to any specific orientation of the aircraft shock strut unless otherwise indicated.

In the illustrated embodiment, the first and second bearings 40 and 46 are generally cylindrical in shape, corresponding to a generally cylindrical cylinder 32 and piston 30. However, it is to be appreciated that the first and/or second bearings can be of some other shape or geometry if the cylinder and piston are of some other shape or geometry, without departing from the scope of the present invention.

In addition, while the embodiment illustrated in FIG. 2 depicts the first bearing 40 being mounted to the piston 30, and the second bearing 46 being mounted to the cylinder 32, the invention is not intended to be limited to this configuration. Rather, one or both of the first bearing 40 and the second bearing 46 can be mounted to the piston 30 without departing from the scope of the present invention.

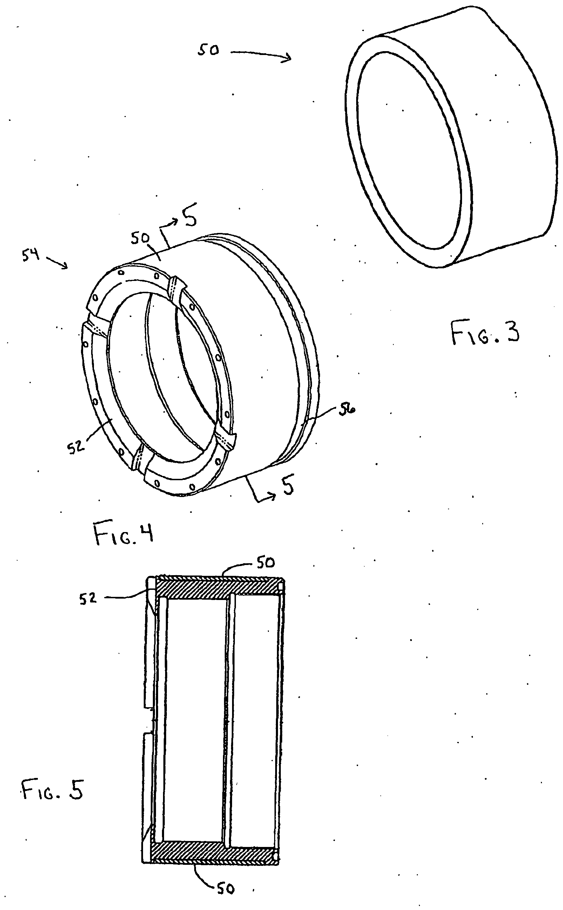

Referring now to FIGS. 3-5, an exemplary bearing 50 in accordance with the present invention is illustrated. In the illustrated embodiment, the bearing 50 is generally cylindrical, e.g., in a sleeve configuration, and is configured to be mounted to or on a bearing carrier 52. The bearing 50 mounted to the bearing carrier 52 will be referred to as a bearing assembly 54. The bearing 50 is located radially outward in relation to the bearing carrier 52, i.e., on the outside diameter of the bearing carrier. In the illustrated embodiment, the bearing 50 is an upper bearing configured to mount to the piston of the shock strut via the bearing carrier 52, with the bearing surface of the bearing 50 providing sliding engagement with an the inner surface of the titanium cylinder.

It is to be appreciated that the bearing carrier 52 may take any suitable geometry or configuration without departing from the scope of the present invention. For example, in the illustrated embodiment, the bearing carrier 52 includes a recess 56, which may function as or otherwise house a retainer. The bearing carrier can be made from any suitable material, such as aluminum, a non-metallic composite material or the like. In the illustrated embodiment, the bearing 50 is configured as a cylindrical sleeve mountable to the bearing carrier 52. Configuring the bearing 50 as a sleeve mountable to a bearing carrier 52 is useful for keeping the cost of the "wearing part" relatively low, while allowing for complexity in the configuration of the bearing carrier. Alternatively, the bearing can be single homogeneous piece made of the same material. That is, the bearing 50 and carrier 52 can be formed as a single piece made of a single material.

The bearing is comprised of a non-metallic composite material that is operable to slidingly engage the inner surface of the titanium cylinder without creating excessive wearing of the inner surface of the titanium cylinder. In one embodiment, the bearing is comprised of a polyimide resin, such as a prepreg made from monomeric mixtures used to form polymerized imides or polyimides. One example of such a composition is available commercially under the trademark Superimide® owned by Goodrich Corporation. Two examples of preferred Superimide® brand composite materials used to form bearing according to the present invention are commercially available from Goodrich Corporation under the names SM438 and SC415. On example of a suitable polyimide material is discussed in U.S. Pat. No. 5,338,827 to Serafini et al.. Other Superimide® brand compositions, as well as other polyimide compositions may be employed without departing from the scope of the present invention.

In another embodiment the bearing is a polyketone thermoplastic material. An example of a suitable polyketone thermoplastic material is available commercially under the trademark Arlon® owned by Greene, Tweed. One exemplary Arlon® brand composition is commercially available under the name Arlon 1286. Other Arlon® brand compositions, as well as other polyketone thermoplastic materials may be employed without departing from the scope of the present invention.

Turning back to FIG. 2 the inner surface 34 of the titanium cylinder 32 is bare. As used herein, the term "bare" includes a surface that is not plated or otherwise coated by another metal or other wear-resistant material. Use of a bearing comprised of one or more of the above-identified non-metallic compositions is believed to allow sliding engagement with the inner surface of a bare titanium cylinder without causing excessive wear.

In one embodiment, the upper bearing is comprised of one of the non-metallic compositions discussed above, while the lower bearing is fixed to the cylinder 32 and provides sliding engagement with the piston 30 by way of a bearing surface comprising a lead-free PTFE material sold under the trademark DP4™ by GGB (formerly Glacier Garlock Bearings). Alternatively, the lower bearing could include a bearing surface formed by any other suitable material.

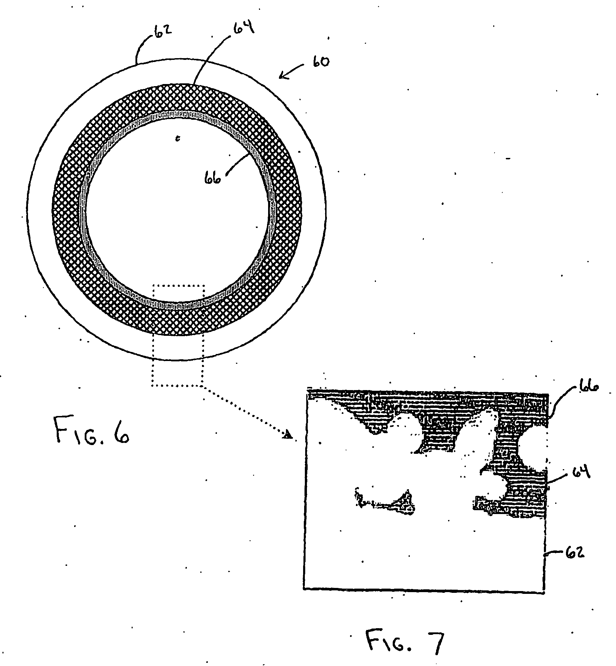

Referring now to FIGS. 6 and 7, an exemplary lower bearing 60 is shown. The lower bearing 60 includes a support structure 62, an intermediate layer 64, e.g., a porous layer, on the support structure 62, and a bearing surface layer 66 (also referred to simply as a bearing surface) on and/or impregnated into the intermediate layer 64. In a preferred embodiment, the intermediate layer 64 is a porous layer; and the bearing surface layer 66 is made of a lead-free polytetrafluoroethylene (PTFE) material on and/or impregnated into the porous layer. In the illustrated embodiment, the porous layer 64 is shown to be on an inner surface of the support structure 62, e.g., radially inward relative to the support structure 62, with the bearing surface 66 on or impregnated into an inner surface of the porous layer 64. However, it is to be appreciated that the bearing surface may be disposed radially outward relative to the support structure 62, e.g., if the bearing was used as an upper bearing on the piston.

In a preferred embodiment, the support structure 62 is comprised of aluminum bronze. One advantage of a support structure comprised of aluminum bronze is that damage to the cylinder and/or the piston would be reduced if the bearing surface were to fail. However, it is to be appreciated that the support structure may be comprised of any material operable to support the porous layer 64 and withstand the process of impregnating and sintering the bearing material layer 66. For example, the support structure may be comprised of another metal, such as a low carbon steel, a metal-plated material, a non-metal material or the like.

The porous layer 64 may comprise any material operable to key or otherwise link the bearing surface material layer 66 to the support structure 62, including, but not limited to, bronze particles sintered to the support structure, copper particles sintered to the support structure and the like.

The bearing surface layer 66 is comprised of a lead-free PTFE material that is on and/or impregnated into the porous layer 64. It will be appreciated that the lead-free PTFE bearing surface layer material described herein provides a sufficiently low coefficient of friction, minimal stick-slip or stiction, and resistance to corroding or otherwise contaminating the hydraulic fluid or oil within the shock strut.

In one embodiment, the lead-free PTFE material comprises a continuous consolidated structure including a continuous PTFE matrix and discrete particles of a lead-free additive material. The particles may be microscopically and macroscopically homogeneously distributed with the PTFE polymer matrix.

In an exemplary embodiment, the additive material may comprise a material suitable for incorporation into an extruded unsintered tape, such that the tape is operable to be impregnated into the porous layer disposed on the support structure and operable to withstand the processing temperatures used to consolidate the bearing surface material layer.

Tapes that are operable to be impregnated into a porous layer disposed upon a support structure may include those that can be impregnated without compacting or closing up the pores of the porous layer, or those that can suitably adhere to the porous layer. Any amount of additive material may be included in the bearing material layer. In one embodiment, the amount of additive material included in the bearing material layer is such that enough PTFE is present to form a continuous consolidated layer.

In one embodiment, the additive material comprises an inorganic particulate filler, such as, but not limited to, ionic fluorides including calcium fluoride, magnesium fluoride, tin fluoride; metal oxides, including, for example, iron oxide, aluminum oxide, titanium dioxide, zinc oxide; and metal hydroxides such as aluminum hydroxide. In another embodiment, the additive material comprises an inorganic particulate filler comprising calcium fluoride. The particle size of the inorganic particulate filler may be determined by a size operable to improve cavitation erosion resistance and wear resistance while retaining desirable low friction properties. In accordance with an embodiment of the wherein the additive material comprises calcium fluoride, the calcium fluoride may have a mean diameter particle size of less than or equal to 10 microns. In another embodiment, the calcium fluoride may have a mean diameter particle size of less than or equal to 2 microns. In another embodiment, the amount of inorganic particulate filler in the bearing material layer is between 10 to 30% by volume. Of course, other particle sizes and concentrations are contemplated within the scope of the present invention.

In another embodiment, the additive material may comprise polyphenylene sulphide particles. In an embodiment, the amount of polyphenylene sulphide in the bearing material layer is between 30 and 70% by volume. In another embodiment, the amount of polyphenylene sulphide is 50% by volume. In another embodiment, the polyphenylene sulphide has a mean diameter particle size of less than or equal to 60 microns. In another embodiment, the polyphenylene sulphide has a mean diameter particle size of less than or equal to 20 microns.

In another embodiment, the bearing material layer may further comprise an organic filler material including, but not limited to, tetrafluoroethylene-perfluoroalkylvinylether copolymers, tetrafluoroethylene-hexafluoropropylene copolymer, tetrafluoroethylene propylene ether polymer, tetrafluoroethylene-ethylene copolymers, polychlorotrifluoroethylene polymers, polychlorotrifluoroethylene-ethylene copolymers, hexafluorolsobutylene polymers, hexafluoroisobutylene-vinylidene fluoride copolymers or hexafluoro propylene polymer. A melt processable organic filler material, such as those listed above, may be included to modify the crystallinity of the PTFE in the extruded unsintered tape and/or the bearing material layer.

The extruded unsintered tape that makes up the bearing surface layer may be produced by any suitable method, including the method described in U.S. Patent No. 5,697,390, where PTFE particles and additive particles are mixed with an air impact pulverizer and then extruded to form a tape.

The extruded unsintered tape may be impregnated into the porous layer by means of a rolling mill, for example. The step of impregnating is conducted under conditions and temperatures that do not sinter the tape or melt any polymer material in the tape.

After impregnating the extruded unsintered tape into a porous layer to form a bearing surface material layer, the bearing surface material layer is sintered to produce a three-layer composite material comprising a continuous consolidated bearing material layer. In one embodiment, all of the PTFE in the bearing material layer is sintered.

As used herein, sintering or consolidating a tape or bearing surface material layer refers to heating PTFE to its melting point or above. When PTFE is heated above its melting point, which may be between 350 degrees Celsius and 425 degrees Celsius, the PTFE is consolidated or densified. Before heating above its melting point, PTFE is relatively soft and can be manipulated into structures such as a porous layer with minimal applied force and without heat.

An advantage of a bearing having a bearing surface formed by a lead-free PTFE material and the method of manufacture described herein is that the bearing surface can be substantially blister free because the extruded unsintered tape does not require liquid lubricant in an amount that could cause blistering under the conditions used to sinter the tape.

Details concerning the composition of and process of making the lead-free PTFE bearing surface material layer are discussed in publication number WO 2004/079217.

## Claims

1. An aircraft shock strut (12), comprising:
a titanium cylinder (32) having an inner surface (34) of bare titanium;
a piston (30) telescopically movable within the cylinder (32); and
a bearing (40; 50) on the piston (30), the bearing (40; 50) having a non-metallic bearing surface providing sliding engagement with the inner surface (34) of the cylinder (32), wherein the bearing surface is formed by a polymerized imide material or a polyketone thermoplastic material.

2. The strut according to claim 1, wherein the cylinder (32) is formed of titanium or a titanium alloy.

3. The strut according to claim 1 or 2, wherein the bearing (40; 50) is comprised of a non-metallic composite material.

4. The strut according to any of claims 1 to 3, wherein the bearing surface is formed by a prepreg made from a monomeric mixture used to form polymerized imides.

5. The strut according to any of claims 1 to 4, wherein the bearing (40; 50) is an upper bearing.

6. The strut according to any of claims 1 to 5, further comprising:
a lower bearing (46; 60) mounted to the cylinder (32), the lower bearing (46; 60) having a bearing surface providing sliding engagement with an outer surface of the piston (30).

7. The strut according to claim 6, wherein the bearing surface of the lower bearing (46; 60) is formed by a lead-free polytetrafluoroethylene (PTFE) material layer (66).

8. The strut according to claim 6, wherein the lower bearing (46; 60) comprises an aluminium bronze support structure (62) and a porous layer (64) on the support structure (62), the bearing surface of the lower bearing (46; 60) being formed by an extruded bearing material layer (66) impregnated into the porous layer (64), wherein the bearing material layer (66) is a continuous consolidated structure comprising a continuous polytetrafluorethylene (PTFE) matrix and discrete particles of an additive material, and the bearing material layer (66) has a portion above the porous layer (64).

9. An aircraft landing gear assembly (10) including the aircraft shock strut (12) of any of claims 1 to 8, wherein preferably the landing gear assembly (10) is a nose landing gear assembly or a main landing gear assembly.

10. A method of reducing weight of an aircraft landing gear (10) including at least one shock strut (12), the at least one shock strut (12) including a cylinder (32) and a piston (30) telescopically movable within the cylinder (32), the method comprising the steps of:
providing a titanium cylinder (32) having an inner surface (34) of bare titanium; and mounting a bearing (40; 50) to the piston (30), the bearing (40; 50) having a non-metallic bearing surface providing sliding engagement with an inner surface (34) of the cylinder (32), wherein the bearing surface is formed by a polymerized imide material or a polyketone thermoplastic material.

11. The method according to claim 10, wherein the non-metallic bearing surface of the bearing (40; 50) provides sliding engagement with the inner surface (34) of the cylinder (32) without causing excessive wear of the inner surface (34) of the cylinder (32).

12. The method according to claim 10 or 11, wherein the bearing (40; 50) is comprised of a non-metallic composite material.

13. The method according to any of claims 10 to 12, wherein the cylinder (32) is formed of titanium or a titanium alloy.

## Patentansprüche

1. Flugzeug-Federbein (12), das Folgendes umfasst:
einen Titanzylinder (32) der eine Innenfläche (34) aus blankem Titan hat;
einen Kolben (30), der teleskopartig innerhalb des Zylinders (32) bewegt werden kann; und
ein Lager (40; 50) an dem Kolben (30), wobei das Lager (40; 50) eine nichtmetallische Lagerfläche aufweist, die einen Gleitengriff mit der Innenfläche (34) des Zylinders (32) bereitstellt, wobei die Lagerfläche durch einen polymerisierten Imid-Werkstoff oder einen thermoplastischen Polyketon-Werkstoff gebildet wird.

2. Flugzeug-Federbein nach Anspruch 1, wobei der Zylinder (32) aus Titan oder einer Titanlegierung gebildet ist.

3. Flugzeug-Federbein nach Anspruch 1 oder 2, wobei das Lager (40; 50) aus einem nichtmetallischen Verbundwerkstoff besteht.

4. Flugzeug-Federbein nach einem der Ansprüche 1 bis 3, wobei die Lagerfläche durch ein Prepreg gebildet wird, das aus einem monomeren Gemisch hergestellt ist, die zum Herstellen von polymerisierten Imiden verwendet wird.

5. Flugzeug-Federbein nach einem der Ansprüche 1 bis 4, wobei das Lager (40; 50) ein oberes Lager ist.

6. Flugzeug-Federbein nach einem der Ansprüche 1 bis 5, das ferner Folgendes umfasst:
ein unteres Lager (46; 60), das an dem Zylinder (32) angebracht ist, wobei das untere Lager (46; 60) eine Lagerfläche aufweist, die einen Gleiteingriff mit einer Außenfläche des Kolbens (30) bereitstellt.

7. Flugzeug-Federbein nach Anspruch 6, wobei die Lagerfläche des unteren Lagers (46; 60) durch eine bleifreie Werkstofflage (66) aus Polytetrafluorethylen (PTFE) gebildet wird.

8. Flugzeug-Federbein nach Anspruch 6, wobei das untere Lager (46; 60) eine Aluminiumbronze-Stützstruktur (62) und eine poröse Lage (64) auf der Stützstruktur (62) umfasst, wobei die Lagerfläche des unteren Lagers (46; 60) durch eine stranggepresste Lagerwerkstofflage (66) gebildet wird, die in die poröse Lage (64) imprägniert ist, gebildet ist, wobei die Lagerwerkstofflage (66) eine durchgehende verfestigte Struktur ist, die eine durchgehende Matrix aus Polytetrafluorethylen (PTFE) und diskrete Partikel eines Zugschlagstoffs umfasst, und die Lagerwerkstofflage (66) einen Abschnitt oberhalb der porösen Lage (64) aufweist.

9. Flugzeug-Fahrwerksbaugruppe (10), die das Flugzeug-Federbein (12) nach einem der Ansprüche 1 bis 8 beinhaltet, wobei die Fahrwerksbaugruppe (10) vorzugsweise eine Bug-Fahrwerksbaugruppe oder eine Haupt-Fahrwerksbaugruppe ist.

10. Verfahren zum Verringern des Gewichts einer Flugzeug-Fahrwerksbaugruppe (10), die mindestens ein Flugzeug-Federbein (12) beinhaltet, wobei das mindestens eine Flugzeug-Federbein (12) einen Zylinder (32) und einen Kolben (30), der teleskopartig innerhalb des Zylinders (32) bewegt werden kann, beinhaltet, wobei das Verfahren folgende Schritte umfasst:
das Bereitstellen eines Titanzylinders (32) der eine Innenfläche (34) aus blankem Titan hat; und das Anbringen eines Lagers (40; 50) an den Kolben (30), wobei das Lager (40; 50) eine nichtmetallische Lagerfläche aufweist, die einen Gleiteingriff mit der Innenfläche (34) des Zylinders (32) bereitstellt, wobei die Lagerfläche durch einen polymerisierten Imid-Werkstoff oder einen thermoplastischen Polyketon-Werkstoff gebildet wird.

11. Verfahren nach Anspruch 10, wobei die nichtmetallische Lagerfläche des Lagers (40; 50) einen Gleiteingriff mit der Innenfläche (34) des Zylinders (32) bereitstellt, ohne übermäßigen Verschleiß der Innenfläche (34) des Zylinders (32) zu verursachen.

12. Verfahren nach Anspruch 10 oder 11, wobei das Lager (40; 50) aus einem nichtmetallischen Verbundwerkstoff besteht.

13. Verfahren nach einem der Ansprüche 10 bis 12, wobei der Zylinder (32) aus Titan oder einer Titanlegierung gebildet ist.

## Revendications

1. Montant amortisseur pour avion (12), comprenant :
un cylindre en titane (32) comportant une surface interne (34) composée de titane de bore ;
un piston (30), pouvant être déplacé de manière télescopique dans le cylindre (32) ; et
un palier (40 ; 50) sur le piston (30), le palier (40 ; 50) comportant une surface de palier non métallique permettant un engagement coulissant dans la surface interne (34) du cylindre (32), dans lequel la surface de palier est formée par un matériau d'imide polymérisé ou un matériau thermoplastique de polycétone.

2. Montant amortisseur selon la revendication 1, dans lequel le cylindre (32) est composé de titane ou d'un alliage de titane.

3. Montant amortisseur selon les revendications 1 ou 2, dans lequel le palier (40 ; 50) est composé d'un matériau composite non métallique.

4. Montant amortisseur selon l'une quelconque des revendications 1 à 3, dans lequel la surface de palier est formée par un prépeg composé d'un mélange monomère utilisé pour former des imides polymérisés.

5. Montant amortisseur selon l'une quelconque des revendications 1 à 4, dans lequel le palier (40 ; 50) est un palier supérieur.

6. Montant amortisseur selon l'une quelconque des revendications 1 à 5, comprenant en outre :
un palier inférieur (46 ; 60) monté sur le cylindre (32), le palier inférieur (46 ; 60) comportant une surface de palier permettant un engagement coulissant dans une surface externe du piston (30).

7. Montant amortisseur selon la revendication 6, dans lequel la surface de palier du palier inférieur (46 ; 60) est formée par une couche de matériau de polytétrafluoroéthylène (PTFE) exempt de plomb (66).

8. Montant amortisseur selon la revendication 6, dans lequel le palier inférieur (46 ; 60) comprend une structure de support en bronze d'aluminium (62) et une couche poreuse (64) sur la structure de support (62), la surface de palier du palier inférieur (46 ; 60) étant formée par une couche de matériau de support extrudé (66) imprégné dans la couche poreuse (64), la couche de matériau de support (66) étant une structure consolidée continue comprenant une matrice continue de polytétrafluoroéthylène (PTFE) et des particules séparées d'un additif, la couche de matériau de support (66) comportant une partie au-dessus de la couche poreuse (64).

9. Assemblage de train d'atterrissage d'un avion (10), englobant le montant amortisseur pour avion (12) selon l'une quelconque des revendications 1 à 8, l'assemblage de train d'atterrissage (10) étant de préférence un assemblage de train d'atterrissage avant ou un assemblage de train d'atterrissage principal.

10. Procédé de réduction du poids d'un train d'atterrissage d'un avion (10) englobant au moins un montant amortisseur (12), l'au moins un montant amortisseur (12) englobant un cylindre (32) et un piston (30) pouvant être déplacé de manière télescopique dans le cylindre (32), le procédé comprenant les étapes ci-dessous :
fourniture d'un cylindre en titane (32) comportant une surface interne (34) composée de titane de bore ; et montage d'un palier (40 ; 50) sur le piston (30), le palier (40 ; 50) comportant une surface de palier non métallique permettant un engagement coulissant dans une surface interne (34) du cylindre (32), dans lequel la surface de palier est formée par un matériau d'imide polymérisé ou un matériau thermoplastique de polycétone.

11. Procédé selon la revendication 10, dans lequel la surface de palier non métallique du palier (40 ; 50) permet un engagement coulissant dans la surface interne (34) du cylindre (32) sans entraîner une usure excessive de la surface interne (34) du cylindre (32).

12. Procédé selon les revendications 10 ou 11, dans lequel le palier (40 ; 50) est composé d'un matériau composite non métallique.

13. Procédé selon l'une quelconque des revendications 10 à 12, dans lequel le cylindre (32) est formé de titane ou d'un alliage de titane.
